# EUROPÄISCHE PATENTSCHRIFT

(11) **EP 3 630 460 B1**
(45) Veröffentlichungstag und Bekanntmachung des Hinweises auf die Patenterteilung: **11.08.2021**
(21) Anmeldenummer: 18729335.2
(22) Anmeldetag: 16.05.2018
(51) Int. Cl.: B29C 65/02, B65B 51/30, B65B 57/00, B65B 57/18, B65B 51/10

(54) **VERFAHREN ZUR FUNKTIONSÜBERWACHUNG EINER SCHLAUCHBEUTELMASCHINE**
METHODS FOR MONITORING THE FUNCTIONS OF A TUBULAR BAG MACHINE
PROCÉDÉS DE SURVEILLANCE DU FONCTIONNEMENT D'UNE ENSACHEUSE TUBULAIRE

(30) Priorität: 23.05.2017 DE 102017208768
(43) Veröffentlichungstag der Anmeldung: 08.04.2020
(73) Patentinhaber: Rovema GmbH, 35463 Fernwald (DE)
(72) Erfinder: KUSS, Gerhard, 35584 Wetzlar (DE)
(74) Vertreter: advotec.
(86) Internationale Anmeldenummer: PCT/EP2018/062734
(87) Internationale Veröffentlichungsnummer: WO 2018/215261

(56) Entgegenhaltungen:
- EP-A2- 0 368 016
- EP-A2- 0 865 989
- DE-A1-102007 004 140
- DE-A1-102013 203 295
- JP-A- 2006 193 176
- US-A- 5 653 085

## Beschreibung

Die Erfindung betrifft ein Verfahren zur Funktionsüberwachung einer Schlauchbeutelmaschine nach dem Oberbegriff des Anspruchs 1.

Schlauchbeutelmaschinen sind gattungsgemäß mit einer Antriebssteuerung ausgestattet, die mehrere elektronische Antriebseinheiten unabhängig voneinander ansteuern kann. Dadurch wird es möglich, die verschiedenen Funktionselemente der Verpackungsmaschine, insbesondere die Siegeleinheiten, beim Abfahren von vordefinierten Bewegungsabläufen taktsynchron anzutreiben.. Eine derartige Schlauchbeutelmaschine ist beispielsweise aus der DE 10 2013 203 295 A1 bekannt.

Das erfindungsgemäße Verfahren ist dabei auf die Funktionsüberwachung der Quersiegeleinheit einer Schlauchbeutelmaschine gerichtet. Die Quersiegeleinheit gattungsgemäßer Schlauchbeutelmaschinen umfasst zumindest einen Antriebsmotor, mit dem zwei relativ zueinander antreibbare Quersiegelbacken angetrieben werden können. Der Antriebsmotor kann beispielsweise in der Art eines Servomotor, eines Getriebe-Servomotors oder eines Torquemotors ausgebildet sein.

Mittels der Quersiegelbacken werden die Folienschläuche bei der Herstellung der Schlauchbeutel quer zur Förderrichtung verschweißt. Dazu werden die Quersiegelbacken unter Einschluss der Folienbahn des Schlauchbeutels zusammengefahren und durch Einbringung von Prozesswärme verschweißt. Gattungsgemäß ist es dabei vorgesehen, dass zum Antrieb der Quersiegelbacken ein Servomotor vorgesehen ist, der mit einer Lagesensorik ausgestattet ist. Der Antriebsmotor wird mit einem Antriebsregler betrieben. Derartige gattungsgemäße Vorrichtungen und Verfahren zur Steuerung der Bewegung von Quersiegeleinheiten einer Schlauchbeutelmaschine sind beispielsweise aus der JP 2006 193176 A, der DE 10 2007 004140 A1 und der EP 0 865 989 A2 bekannt.

Der Antriebsregler soll dabei ganz allgemein dadurch charakterisiert werden, dass mit ihm mittelbar oder unmittelbar das vom Antriebsmotor aufgebrachte Antriebsmoment gemessen werden kann. Die Lagesensorik soll ganz allgemein dadurch charakterisiert sein, dass mit ihr mittelbar oder unmittelbar die Stellung des Antriebsmotors gemessen werden kann.

Für den eigentlichen Siegelprozess in der Schweißzone zwischen den beiden Quersiegelbacken ist die zwischen den Quersiegelbacken wirkende Siegelkraft ein hochrelevanter Prozessparameter für die Einhaltung der gewünschten Siegelqualität. Aus der EP 0 368 016 A2 ist ein gattungsgemäßes Verfahren zur Steuerung der Bewegung der Quersiegelbacken in Abhängigkeit von Anpressdruck, Temperatur und erforderlicher Siegelzeit bekannt. Allerdings ist die unmittelbare Messung der Siegelkraft zwischen den beiden Siegelbacken nur mit aufwendigen Sensorsystemen möglich, weshalb stattdessen bei bekannten Schlauchbeutelmaschinen üblicherweise das Antriebsmoment des Antriebsmotors gemessen wird. Da das Antriebsmoment von den mechanischen Komponenten der Quersiegeleinheit auf die Quersiegelbacken übertragen wird, kann die zwischen den Quersiegelbacken wirkende Siegelkraft unter Verwendung einer Übertragungsfunktion, die im Wesentlichen die Federsteifigkeit der mechanischen Komponenten der Quersiegeleinheit darstellt, aus dem jeweiligen Antriebsmoment des Antriebsmotors und der Position des Antriebs abgeleitet werden. Vielfach wird die jeweils zu verwendende Übertragungsfunktion zur Charakterisierung der mechanischen Eigenschaften der Quersiegeleinheit, mit der das Antriebsmoment des Antriebsmotors in die Siegelkraft der Siegelbacken übertragen wird, experimentell ermittelt. Unter Verwendung dieser einmal eingestellten Übertragungsfunktion wird dann der Betrieb der Schlauchbeutelmaschine vorgenommen, wobei jedoch Störungen und Abweichungen der Übertragungsfunktion nicht mehr feststellbar sind. Ein gattungsgemäßes Verfahren zur Umrechnung der Position des Antriebsmotors in die Siegelkraft zwischen den Quersiegelbacken ist aus der US 5 653 085 A bekannt.

Ist beispielsweise die Quersiegelnaht kontaminiert oder befinden sich Einschlüsse zwischen der Folienlage oder wurde der Beutel beim Umformen nicht korrekt eingefaltet, so gelangt die Folie mit Maßabweichungen zwischen die Siegelwerkzeuge in die Quersiegelbacken. Aufgrund dieser Maßabweichungen und der sich dadurch ändernden Geometrie kommt es dazu, dass sich die Übertragungsfunktion, mit der das Antriebsmoment in die Siegelkraft übersetzt wird, entscheidend verändert. Auch durch unterschiedliche Montagebedingungen kann es zu Veränderungen in der Übertragungsfunktion kommen.

Bei den bekannten Schlauchbeutelmaschinen können diese Änderungen in der Charakteristik der Übertragungsfunktion zwischen Antriebsmotor und Quersiegelbacken nicht festgestellt werden, weshalb bei Störungen des Verpackungsprozesses eine Fehleranalyse bzw. Fehlervermeidung vielfach nicht möglich ist. Stattdessen wird die Produktion der Schlauchbeutel trotz der Störung fortgesetzt, ohne dass der eigentliche Fehler und die mangelhafte Qualität der Quersiegelung erkannt werden könnte.

Aufgabe der vorliegenden Erfindung ist es deshalb, ein Verfahren zur Funktionsüberwachung einer Schlauchbeutelmaschine vorzuschlagen, mit der Änderungen und Störungen der Übertragungsfunktion zwischen Antriebsmotor und Quersiegeleinheit während des eigentlichen Schlauchbeutelherstellungsprozesses festgestellt werden können.

Diese Aufgabe wird durch die Lehre der beiden unabhängigen Hauptansprüche gelöst.

Vorteilhafte Ausführungsformen der Erfindung sind Gegenstand der Unteransprüche.

Das erfindungsgemäße Verfahren beruht zunächst einmal darauf, dass zu Beginn der Funktionsüberwachung der Folienschlauch zwischen die Quersiegelbacken gebracht wird. Während der Herstellung der Schlauchbeutel befindet sich der Folienschlauch ohnehin zwischen den Quersiegelbacken, so dass das erfindungsgemäße Verfahren zur Funktionsüberwachung parallel zum eigentlichen Herstellungsverfahren durchgeführt werden kann.

Gemäß der ersten Variante des erfindungsgemäßen Verfahrens werden die Quersiegelbacken dann unter Vorgabe eines in der Antriebssteuerung abgespeicherten Soll-Drehmoments zusammengefahren. Nach Erreichen des Soll-Drehmoments wird anschließend die Ist-Stellung des Antriebsmotors gemessen. Diese Ist-Stellung des Antriebsmotors wird bei Erreichen des Soll-Drehmoments mit einer in der Antriebssteuerung abgespeicherten Soll-Stellung, die dem vorgegebenen Soll-Drehmoment zugeordnet ist, verglichen. Weicht die gemessene Ist-Stellung bei Erreichen des Soll-Drehmoments von der erwarteten Soll-Stellung ab, so kann daraus geschlossen werden, dass die Übertragungsfunktion zwischen Antriebsmotor und Quersiegeleinheit eine unerwartete Änderung erfahren hat, so dass mit der bisher vorhandenen Übertragungsfunktion nicht die gewünschte Qualität produziert werden kann. In diesen Fällen muss dann eine weitere Fehleranalyse vorgenommen werden, um den Produktionsprozess wieder in die gewünschten Qualitätsgrenzen zu führen.

In welcher Weise die Soll-Stellung, die dem vorgegebenen Soll-Drehmoment zugeordnet ist, ermittelt wird, ist grundsätzlich beliebig. Besonders einfach kann dies dadurch gelingen, dass zur Ermittlung der Soll-Stellung die Quersiegeleinheit zunächst kalibriert und damit definierte Randbedingungen eingestellt werden. Anschließend werden die Quersiegelbacken zugammengefahren und das gewünschte Soll-Drehmoment aufgebaut. Nach Erreichen des Soll-Drehmoments wird die dabei erreichte Ist-Stellung des Antriebsmotors gemessen und diese Ist-Stellung anschließend in der Antriebssteuerung als die Soll-Stellung abgespeichert, die dem Soll-Drehmoment zugeordnet ist.

Um die Genauigkeit bei der Ermittlung der Soll-Stellung, die dem Soll-Drehmoment zugeordnet ist, zu erhöhen, kann der entsprechende Prozess zum Anfahren des Soll-Drehmoments und der Messung der dabei erreichten Ist-Stellung mehrfach wiederholt werden, wobei die dabei gemessenen Ist-Stellungen anschließend in einen Durchschnittswert überführt und dieser Durchschnittswert dann als Soll-Stellung in der Antriebssteuerung abgespeichert wird.

Alternativ kann das erfindungsgemäße Verfahren auch dadurch durchgeführt werden, dass beim Zusammenfahren der Quersiegelbacken statt eines Soll-Drehmoments eine Soll-Stellung vorgegeben wird. Anschließend wird dann das nach Erreichen der Soll-Stellung aufgebrachte Ist-Drehmoment des Antriebsmotors gemessen und zuletzt dieses gemessene Ist-Drehmoment mit einem in der Antriebssteuerung abgespeicherten Soll-Drehmoment, das der vorgegebenen Soll-Stellung zugeordnet ist, verglichen.

Bei dieser Verfahrensvariante kann wiederum zur Ermittlung des Soll-Drehmoments die Quersiegeleinheit zunächst kalibriert und anschließend für die vorgegebene Soll-Stellung ein Ist-Drehmoment gemessen werden. Dieses bei den definierten Randbedingungen erreichte Ist-Drehmoment wird anschließend in der Antriebsstellung als Soll-Drehmoment, das der Soll-Stellung zugeordnet ist, abgespeichert. Die Genauigkeit bei der Ermittlung des Soll-Drehmoments kann wiederum durch Wiederholung der entsprechenden Messungen des Ist-Drehmoments und Bildung eines Durchschnittswerts erreicht werden.

Für das mechanische Verhalten der Übertragung des Antriebsmoments des Antriebsmotors auf die Siegelkraft der Siegeleinheit ist insbesondere auf die jeweils vorhandene Prozesstemperatur von maßgeblicher Bedeutung. Denn die mechanische Festigkeit der Bauteile zwischen Antriebsmotor und Quersiegelbacken wird abhängig von der jeweiligen Temperatur entweder erhöht oder abgesenkt. Entsprechend verändert sich dadurch auch die Übertragungsfunktion zwischen Antriebsmotor und Quersiegelbacken. Um diese Fehlerquelle auszuschalten ist es deshalb besonders vorteilhaft, wenn das erfindungsgemäße Verfahren mit den Verfahrensschritten a), b), c) und d) bei einer in der Antriebssteuerung abgespeicherten Referenztemperatur durchgeführt wird.

Die Referenztemperatur sollte dabei bevorzugt der Temperatur entsprechen, bei der die Soll-Stellung bzw. die Soll-Drehmomente durch Messung von Ist-Stellungen bzw. Ist-Drehmomenten der kalibrierten Quersiegeleinheit ermittelt wurden.

Im Verfahrensschritt d) der beiden erfindungsgemäßen Verfahren werden die gemessenen Ist-Werte jeweils mit den erwarteten Soll-Werten für die Stellung bzw. das Drehmoment des Antriebsmotors verglichen. Um eine Auswertung dieser Vergleichsergebnisse zu erleichtern, ist es besonders vorteilhaft, wenn die im Verfahrensschritt d) ermittelte Differenz zwischen Soll-Stellung und Ist-Stellung bzw. zwischen Soll-Drehmoment und Ist-Drehmoment mit einer in der Antriebssteuerung abgespeicherten Toleranzschwelle verglichen wird. Erst bei Überschreiten der Toleranzschwelle wird dann eine Fehlermeldung ausgegeben. Dadurch wird verhindert, dass bereits sehr kleine Abweichungen zwischen Soll-Wert und Ist-Wert bereits zu einer Fehlermeldung führen.

In welcher Weise die Ist-Stellung des Antriebsmotors gemessen wird, ist grundsätzlich beliebig. Gemäß einer bevorzugten Ausführungsform ist es vorgesehen, dass zunächst die Ist-Stellung unmittelbar mit einem Drehwinkelsensor gemessen wird. Wenn die Folie verschweißt wird, können die Quersiegelbacken nicht vollständig zusammengefahren werden. Das heißt, je nach Vorgabe der Siegelkraft ergibt sich ein Siegelweg, auf dem die Folie komprimiert wird.

Weiter ist es auch im Prinzip beliebig, in welcher Weise das Ist-Drehmoment des Antriebsmotors gemessen wird. Besonders einfach kann dies durch mittelbare Messung mit dem Antriebsregler realisiert werden. Denn Servomotoren gemäß dem Stand der Technik übertragen vorbestimmte Drehmomente mit hoher Genauigkeit.

Um die korrekten Siegelparameter bei der Herstellung von Schlauchbeutel zu dokumentieren, ist es besonders vorteilhaft, wenn nach Durchführung der Verfahrensschritte a), b), c) und d) das jeweils gemessene Ist-Drehmoment und die jeweils gemessene Ist-Stellung abgespeichert und dokumentiert wird.

Die beiden erfindungsgemäßen Verfahren können zur Funktionsüberwachung sowohl von kontinuierlich arbeitenden Schlauchbeutelmaschinen als auch von intermittierend arbeitenden Schlauchbeutelmaschinen eingesetzt werden.

Eine Ausführungsform der Erfindung ist in den Zeichnungen schematisch dargestellt und wird nachfolgend beispielhaft erläutert.

Es zeigen:
**Fig. 1** die Quersiegeleinheit einer bekannten Schlauchbeutelmaschine in schematisierter seitlicher Ansicht;
**Fig. 2** ein Diagramm zur Ermittlung der einem Soll-Drehmoment zugeordneten Soll-Stellung;
**Fig. 3** ein Diagramm zur Funktionsüberwachung der Quersiegeleinheit gemäß Fig. 1 unter Berücksichtigung einer Toleranzschwelle.

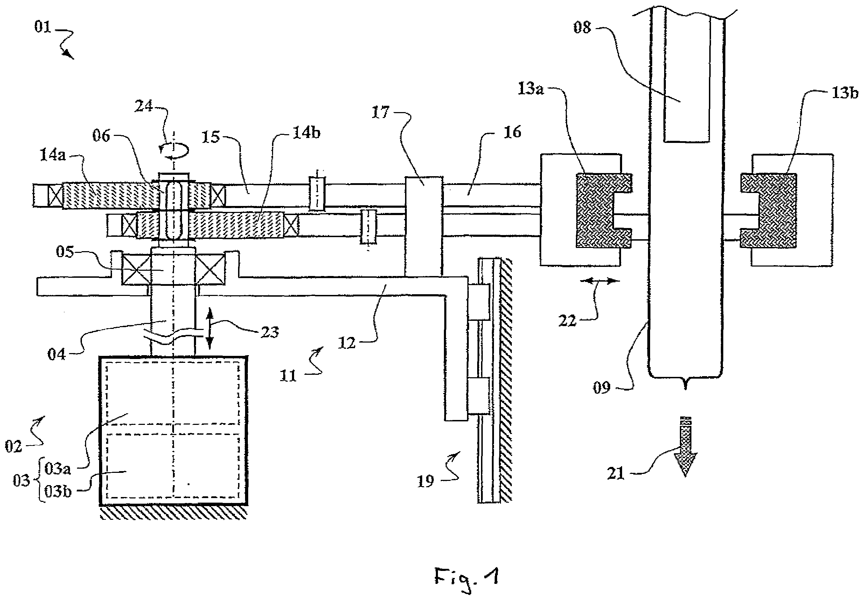

In **Fig. 1** ist die Quersiegeleinheit einer Schlauchbeutelmaschine mit zwei relativ zueinander beweglichen Quersiegelbacken beispielhaft skizziert.

Zu erkennen ist in Fig. 1 ein endlos erzeugter Folienschlauch 09, in dem ein Verpackungsgut mittels eines Einführrohrs 08 eingeführt werden kann. Der Folienschlauch 09 wird dabei in Förderrichtung 21 transportiert. Zur Erzeugung der einzelnen Schlauchbeutel wird der Folienschlauch 09 quergesiegelt. Dazu dienen die Quersiegelbacken 13a und 13b. Diese Quersiegelbacken 13a und 13b können in Querrichtung 22 quer zur Förderrichtung 21 aufeinander zu bzw. voneinander weg bewegt werden. In der Siegelstellung werden die Quersiegelbacken 13a und 13b gegeneinander gefahren, so dass der dazwischenliegende Folienschlauch 09 verpresst und durch Beheizen der Quersiegelbacken 13a und 13b verschweißt werden kann. Die Technik für das Quersiegeln von Schlauchbeuteln ist im Prinzip bekannt und bedarf keiner weiteren Erläuterung.

Die Quersiegelbacken 13a und 13b sind in dem in Fig. 1 dargestellten Ausführungsbeispiel jeweils an Haltestangen 16 angeordnet, die in einer Haltestangenlagerung 17 in Querrichtung linear verschiebbar gelagert sind. Eine gegenläufige Bewegung der Quersiegelbacken 13a und 13b wird mittels einer Exzenteranordnung realisiert. Hierzu wird auf der Antriebswelle 04 je Haltestange 16 ein Exzenterelement 14a und 14b drehfest angeschlagen. Am Exzenterelement 14a bzw. 14b ist wiederum ein Koppelelement 15 drehbar gelagert, welches schwenkbar mit der zugehörigen Haltestange 16 in Verbindung steht. Somit können die rotierende Drehbewegung 24 der Antriebswelle 04 und zugleich die Exzenterelemente 14a und 14b in alternierender Bewegung der jeweiligen Haltestande 16 und somit der Quersiegelbacken 13a und 13b übertragen werden.

Die Anordnung der Exzenterelemente 14a und 14b auf der Antriebswelle 04 bildet zusammen mit dem Koppelelement 15 und der Haltestange 16 eine Übersetzungseinrichtung, welche die Drehbewegung 24 der Antriebswelle 04 in alternierende gegenläufige Bewegung der Quersiegelbacken 13a und 13b übersetzt. Die Übersetzungseinrichtung mit den Quersiegelbacken 13a und 13b ist Bestandteil der Quersiegeleinheit 11. Zum Antrieb der Antriebwelle 04 ist ein in der Art eines Servomotors ausgebildeter Antriebsmotor 02 mit einem Stator 03a und einem Stator 03b vorgesehen. Der Antriebsmotor 02 ist in der Art eines Servomotors ausgebildet, bei dem die Ist-Stellung, nämlich der Drehwinkel ϕ, und das Ist-Drehmoment M mit einem Antriebsregler, der in Fig. 1 nicht dargestellt ist, gemessen werden kann.

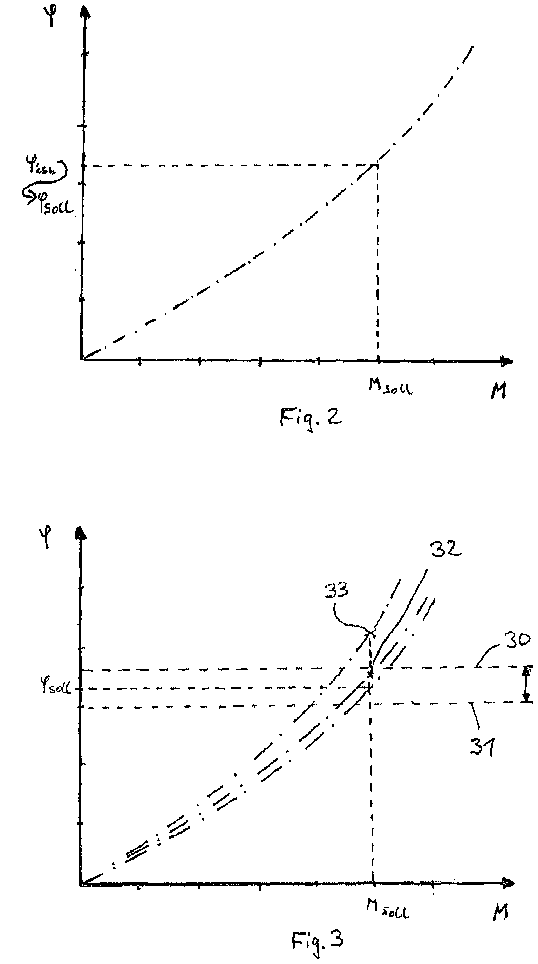

**Fig. 2** zeigt ein Diagramm zur Aufnahme einer Soll-Stellung, nämlich des Soll-Drehwinkels ϕ, die jeweils einem Soll-Drehmoment M zugeordnet ist. Zur Aufnahme des entsprechenden Wertes des Soll-Drehwinkels ϕ wird zunächst die gesamte Schlauchbeutelmaschine mit der Quersiegeleinheit 01 kalibriert und der für den Schlauchbeutelherstellungsprozess verwendete Folienschlauch 09 zwischen die Quersiegelbacken 13a und 13b gebracht. Anschließend wird der Quersiegeleinheit 01 von der Antriebssteuerung das Soll-Drehmoment M_{Soll} vorgegeben. Sobald der Drehmomentwert M_{Soll} erreicht wurde, wird von der Stellungssensorik des Servomotors der Ist-Drehwinkel ϕ_{Ist} ermittelt und der so ermittelte Ist-Drehwinkel anschließend als Soll-Drehwinkel ϕ_{Soll} in der Antriebssteuerung abgespeichert. Wie in Fig. 2 skizzenhaft beispielhaft dargestellt, liegt das Wertepaar von M_{Soll} und ϕ_{Soll} auf einer Federkennlinie, die die Federsteifigkeit der Quersiegeleinheit repräsentiert.

**Fig. 3** zeigt das Diagramm gemäß Fig. 2 ergänzt durch zwei Toleranzschwellen 30 und 31. Die beiden Toleranzschwellen 30 und 31 bilden dabei einen Korridor um den Wert des Soll-Drehwinkels ϕ_{Soll}. Während der Herstellung der Schlauchbeutel werden nun permanent die dabei sich ergebenden Wertepaare des angefahren Soll-Drehmoments M_{Soll} und die sich dabei ergebende Ist-Stellung prozessbegleitend überprüft. In Fig. 3 sind beispielhaft zwei solche Wertepaare 32 und 33 angetragen. Beim Wertepaar 32 liegt die Ist-Stellung nach Erreichen des Soll-Drehmoments M_{Soll} etwas oberhalb des Werts des Soll-Drehwinkels ϕ_{Soll} aber noch unterhalb der Toleranzschwelle 30. In diesem Fall wurde also noch keine Fehlermeldung ausgegeben, da der Abweichungsfehler noch relativ gering ist.

Beim Wertepaar 33 liegt der Ist-Drehwinkel bei Erreichen des Soll-Drehmoments M_{Soll} bereits außerhalb des Toleranzkorridors, so dass eine Fehlermeldung ausgegeben wurde.

## Patentansprüche

1. Verfahren zur Funktionsüberwachung einer Schlauchbeutelmaschine, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotor (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann, und wobei die Stellung (cp) des Antriebsmotors (02) mit einem Stellungssensor mittelbar oder unmittelbar gemessen werden kann,
**dadurch gekennzeichnet,**
**dass** das Antriebsmoment (M) des Antriebsmotors (02) mit einem Antriebsregler mittelbar oder unmittelbar gemessen werden kann, und dass
das Verfahren folgende Verfahrensschritte aufweist:
a) Einfördern des Folienschlauchs (09) in die Siegelzone zwischen den Quersiegelbacken (13a, 13b);
b) Zusammenfahren der Quersiegelbacken (13a, 13b) unter Vorgabe eines in der Antriebsteuerung gespeicherten Soll-Drehmoments;
c) Messen der Ist-Stellung des Antriebsmotors (02) nach Erreichen des Soll-Drehmoments;
d) Vergleich der gemessenen Ist-Stellung mit einer in der Antriebsteuerung abgespeicherten Soll-Stellung, die dem vorgegebenen Soll-Drehmoments zugeordnet ist.

2. Verfahren nach Anspruch 1,
**dadurch gekennzeichnet,**
**dass** zur Ermittlung der Soll-Stellung die Quersiegeleinheit zunächst kalibriert und anschließend für das vorgegebene Soll-Drehmoment die erreichten Ist-Stellung gemessen wird, wobei die so gemessenen Ist-Stellungen in der Antriebssteuerung als Soll-Stellung, die dem Soll-Drehmoment zugeordnet ist, abgespeichert wird.

3. Verfahren nach Anspruch 2,
**dadurch gekennzeichnet,**
**dass** für das vorgegebene Soll-Drehmoment mehrfach hintereinander die jeweils erreichten Ist-Stellungen gemessen wird, wobei aus den so gemessenen Ist-Stellungen ein Durchschnittswert errechnet wird, und wobei der Durchschnittswert in der Antriebssteuerung als Soll-Stellung, die dem Soll-Drehmoment zugeordnet ist, abgespeichert wird.

4. Verfahren zur Funktionsüberprüfung einer Schlauchbeutelmaschine, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotors (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann, und wobei die Stellung (cp) des Antriebsmotors (02) mit einem Stellungssensor mittelbar oder unmittelbar gemessen werden kann,
**dadurch gekennzeichnet,**
**dass** das Antriebsmoment (M) des Antriebsmotors (02) mit einem Antriebsregler mittelbar oder unmittelbar gemessen werden kann, und dass das Verfahren folgende Verfahrensschritte aufweist:
a) Einfördern des Folienschlauchs (09) in die Siegelzone zwischen den Quersiegelbacken (13a, 13b);
b) Zusammenfahren der Quersiegelbacken (13a, 13b) unter Vorgabe einer in der Antriebsteuerung gespeicherten Soll-Stellung;
c) Messen des Ist-Drehmoments des Antriebsmotors nach Erreichen des Soll-Stellung;
d) Vergleich des gemessenen Ist-Drehmoments mit einem in der Antriebsteuerung abgespeicherten Soll-Drehmoment, das der vorgegebenen Soll-Stellung zugeordnet ist.

5. Verfahren nach Anspruch 4,
**dadurch gekennzeichnet,**
**dass** zur Ermittlung des Soll-Drehmoments die Quersiegeleinheit zunächst kalibriert und anschließend für die vorgegebene Soll-Stellung das erreichte Ist-Drehmoment gemessen wird, wobei das so gemessene Ist-Drehmoment in der Antriebssteuerung als Soll-Drehmoment, das der Soll-Stellung zugeordnet ist, abgespeichert wird.

6. Verfahren nach Anspruch 5,
**dadurch gekennzeichnet,**
**dass** für die vorgegebene Soll-Stellung mehrfach hintereinander das jeweils erreichte Ist-Drehmoment gemessen wird, wobei aus den so gemessenen Ist-Drehmomenten ein Durchschnittswert errechnet wird, und wobei der Durchschnittswert in der Antriebssteuerung als Soll-Drehmoment, das der Soll-Stellung zugeordnet ist, abgespeichert wird.

7. Verfahren nach einem der Ansprüche 1 bis 6,
**dadurch gekennzeichnet,**
**dass** die Verfahrensschritte a), b), c) und d) bei einer in der Antriebssteuerung abgespeichert Referenztemperatur durchgeführt werden.

8. Verfahren nach Anspruch 7,
**dadurch gekennzeichnet,**
**dass** die Referenztemperatur der gemessenen Temperatur entspricht, bei der die Soll-Stellungen oder Soll-Drehmomenten durch Messung von Ist-Stellungen oder Ist-Drehmomenten der kalibrierten Quersiegeleinheit ermittelt wurden.

9. Verfahren nach einem der Ansprüche 1 bis 8,
**dadurch gekennzeichnet,**
**dass** eine im Verfahrensschritt d) ermittelte Differenz zwischen Soll-Stellung und Ist-Stellung oder zwischen Soll-Drehmoment und Ist-Drehmoment mit einem in der Antriebsteuerung abgespeicherten Toleranzschwelle (30, 31) verglichen wird, wobei beim Überschreiten der Toleranzschwelle (30, 31) eine Fehlermeldung ausgegeben wird.

10. Verfahren nach einem der Ansprüche 1 bis 9,
**dadurch gekennzeichnet,**
**dass** die Ist-Stellung unmittelbar mit einem Drehwinkelsensor gemessen wird.

11. Verfahren nach einem der Ansprüche 1 bis 10,
**dadurch gekennzeichnet,**
**dass** das Ist-Drehmoment mittelbar vom Antriebsregler des Antriebsmotors (02) gemessen wird.

12. Verfahren nach einem der Ansprüche 1 bis 11,
**dadurch gekennzeichnet,**
**dass** nach Durchführung der Verfahrensschritte a), b), c) und d) das jeweils gemessene Ist-Drehmoment und/oder die jeweils gemessene Ist-Stellung abgespeichert und dokumentiert wird.

13. Verfahren nach einem der Ansprüche 1 bis 12,
**dadurch gekennzeichnet,**
**dass** von den Antriebseinheiten ein Bewegungsablauf zur intermittierenden Herstellung von Schlauchbeuteln abgefahren wird.

14. Verfahren nach einem der Ansprüche 1 bis 12,
**dadurch gekennzeichnet,**
**dass** von den Antriebseinheiten ein Bewegungsablauf zur kontinuierlichen Herstellung von Schlauchbeuteln abgefahren wird.

## Claims

1. A method for monitoring the function of a tubular bag machine, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realized in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), and the position (ϕ) of the drive motor (02) being measured directly or indirectly using a position sensor,
**characterized in that**
the drive torque (M) of the drive motor (02) is measured directly or indirectly using a drive controller, and that the method comprises the following method steps:
a) moving the film tube (09) into the sealing zone between the transverse sealing jaws (13a, 13b);
b) closing the transverse sealing jaws (13a, 13b) according to a predefined target torque stored in the drive control system;
c) measuring the actual position of the drive motor (02) once the target torque has been reached;
d) comparing the measured actual position to a target position stored in the drive control system and associated with the predefined target torque.

2. The method according to claim 1,
**characterized in that**
to determine the target position, the transverse sealing unit is first calibrated, and then the actual position reached is measured for the predefined target torque, the actual positions thus measured being stored in the drive control system as the target position associated with the target torque.

3. The method according to claim 2,
**characterized in that**
the actual positions reached are measured multiple times in a row for the predefined target torque, a mean value being calculated from the actual positions thus measured and the mean value being stored in the drive control system as the target position associated with the target torque.

4. A method for testing the function of a tubular bag machine, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realized in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), and the position (ϕ) of the drive motor (02) being measured directly or indirectly using a position sensor,
**characterized in that**
the drive torque (M) of the drive motor (02) is measured directly or indirectly using a drive controller, the method comprising the following method steps:
a) moving the film tube (09) into the sealing zone between the transverse sealing jaws (13a, 13b);
b) closing the transverse sealing jaws (13a, 13b) according to a predefined target position stored in the drive control system;
c) measuring the actual torque of the drive motor once the target position has been reached;
d) comparing the measured actual torque to a target torque stored in the drive control system and associated with the predefined target position.

5. The method according to claim 4,
**characterized in that**
to determine the target torque, the transverse sealing unit is first calibrated, and then the actual torque reached is measured for the predefined target position, the actual torque thus measured being stored in the drive control system as the target torque associated with the target position.

6. The method according to claim 5,
**characterized in that**
the actual torque reached is measured multiple times in a row for the predefined target position, a mean value being calculated from the actual torques thus measured and the mean value being stored in the drive control system as the target torque associated with the target position.

7. The method according to any one of claims 1 to 6,
**characterized in that**
methods steps a), b), c) and d) are carried out at a reference temperature stored in the drive control system.

8. The method according to claim 7,
**characterized in that**
the reference temperature corresponds to the measured temperature at which the target positions or the target torques were determined by measuring actual positions or actual torques of the calibrated transverse sealing unit.

9. The method according to any one of claims 1 to 8,
**characterized in that**
a difference determined in method step d) between the target position and the actual position or between the target torque and the actual torque is compared to a tolerance threshold (30, 31) stored in the drive control system, an error being reported if the tolerance threshold (30, 31) is exceeded.

10. The method according to any one of claims 1 to 9,
**characterized in that**
the actual position is measured directly using a rotation angle sensor.

11. The method according to any one of claims 1 to 10,
**characterized in that**
the actual torque is measured indirectly by the drive controller of the drive motor (02).

12. The method according to any one of claims 1 to 11,
**characterized in that**
once method steps a), b), c) and d) have been carried out, the measured actual torque and/or the measured actual position are stored and documented.

13. The method according to any one of claims 1 to 12,
**characterized in that**
the drive units go through a motion sequence for the intermittent production of tubular bags.

14. The method according to any one of claims 1 to 12,
**characterized in that**
the drive units go through a motion sequence for the continuous production of tubular bags.

## Revendications

1. Procédé pour le contrôle de la fonction d'une ensacheuse, l'ensacheuse comprenant un système de commande d'entraînement et plusieurs unités motrices électriques qui sont commandées séparément par le système de commande d'entraînement et qui entraînent des éléments fonctionnels de la machine à emballer de manière synchrone par rapport au temps de cycle quand elles passent des séquences de mouvements prédéfinies, et une unité motrice étant réalisée de manière à une unité de scellage transversal, et l'unité de scellage transversal comprenant au moins un moteur d'entraînement (02) et deux mâchoires de scellage transversal (13a, 13b) qui sont entraînées par rapport l'une à l'autre par le moteur d'entraînement (02) et au moyen de lesquelles un tube de film (09) est scellé en sens de transport (21), et la position (cp) du moteur d'entraînement (02) étant mesurée directement ou indirectement en utilisant un capteur de position,
**caractérisé en ce que**
la force d'entraînement (M) du moteur d'entraînement (02) est mesurée directement ou indirectement en utilisant une commande d'entraînement, et **en ce que** le procédé comprend les étapes de procédé suivantes :
a) convoyer le tube de film (09) dans la zone de scellage entre les mâchoires de scellage transversal (13a, 13b) ;
b) fermer les mâchoires de scellage transversal (13a, 13b) selon un couple de consigne stocké dans le système de commande d'entraînement ;
c) mesurer la position réelle du moteur d'entraînement (02) lorsque le couple de consigne a été atteint ;
d) comparer la position réelle mesurée avec une position de consigne stockée dans le système de commande d'entraînement et associée avec le couple de consigne prédéfini.

2. Procédé selon la revendication 1,
**caractérisé en ce**
**qu'**afin de déterminer la position de consigne, l'unité de scellage transversal est calibrée dans un premier temps et la position réelle atteinte est mesurée pour le couple de consigne prédéfini dans un deuxième temps, les positions réelles tellement mesurée étant stockées dans le système de commande d'entraînement comme position de consigne associé avec le couple de consigne.

3. Procédé selon la revendication 2,
**caractérisé en ce que**
les positions réelles atteintes sont mesurées plusieurs fois d'affilée pour le couple de consigne prédéfini, une moyenne étant calculée de positions réelles tellement mesurées et la moyenne étant stockée dans le système de commande d'entraînement comme position de consigne associée avec le couple de consigne.

4. Procédé pour le contrôle de la fonction d'une ensacheuse, l'ensacheuse comprenant un système de commande d'entraînement et plusieurs unités motrices électriques qui sont commandées par le système de commande d'entraînement séparément et qui entraînent des éléments fonctionnels de la machine à emballer de manière synchrone par rapport au temps de cycle quand elles passent des séquences de mouvements prédéfinies, et une unité motrice étant réalisée de manière à une unité de scellage transversal, et l'unité de scellage transversal comprenant au moins un moteur d'entraînement (02) et deux mâchoires de scellage transversal (13a, 13b) qui sont entraînées par rapport l'une à l'autre par le moteur d'entraînement (02) et au moyen de laquelle un tube de film (09) est scellé en sens de transport (21), et la position (cp) du moteur d'entraînement (02) étant mesurée directement ou indirectement en utilisant un capteur de position,
**caractérisé en ce que**
la force d'entraînement (M) du moteur d'entraînement (02) est mesurée directement ou indirectement en utilisant une commande d'entraînement, et **en ce que** le procédé comprend les étapes de procédé suivantes :
a) convoyer le tube de film (09) dans la zone de scellage entre les mâchoires de scellage transversal (13a, 13b) ;
b) fermer les mâchoires de scellage transversal (13a, 13b) selon une position de consigne prédéfinie stockée dans le système de commande d'entraînement ;
c) mesurer le couple réel du moteur d'entraînement lorsque la position de consigne a été atteinte ;
d) comparer le couple réel mesuré avec un couple de consigne stocké dans le système de commande d'entraînement et associé avec le couple de consigne prédéfini.

5. Procédé selon la revendication 4,
**caractérisé en ce**
**qu'**afin de déterminer le couple de consigne, l'unité de scellage transversal est calibrée dans un premier temps et le couple réel atteint est mesuré pour la position de consigne prédéfinie dans un deuxième temps, le couple réel tellement mesuré étant stockés dans le système de commande d'entraînement comme moment couple de consigne associé avec la position de consigne.

6. Procédé selon la revendication 5,
**caractérisé en ce que**
le couple réel atteint est mesuré plusieurs fois d'affilée pour la position de consigne prédéfinie, une moyenne étant calculée de couples réels tellement mesurés et la moyenne étant stockée dans le système de commande d'entraînement comme couple de consigne associé avec la position de consigne.

7. Procédé selon l'une quelconque des revendications 1 à 6,
**caractérisé en ce que**
les étapes de procédé a), b), c) et d) sont effectuées à une température de référence stockée dans le système de commande d'entraînement.

8. Procédé selon la revendication 7,
**caractérisé en ce que**
la température de référence correspond à la température mesurée à laquelle les positions de consigne ou les couples consigne ont été déterminés en mesurant des positions réelles ou des couples réels de l'unité de scellage transversal calibrée.

9. Procédé selon l'une quelconque des revendications 1 à 8,
**caractérisé en ce**
**qu'**une différence déterminée dans l'étape de procédé d) entre la position de consigne et la position réelle ou entre le couple de consigne et le couple réel est comparée avec un seuil de tolérance (30, 31) stocké dans le système de commande d'entraînement, un erreur étant signalé si le seuil de tolérance (30, 31) est surpassé.

10. Procédé selon l'une quelconque des revendications 1 à 9,
**caractérisé en ce que**
la position réelle est mesurée directement en utilisant un capteur d'angle de rotation.

11. Procédé selon l'une quelconque des revendications 1 à 10,
**caractérisé en ce que**
le couple réel est mesuré indirectement par la commande d'entraînement du moteur d'entraînement (02).

12. Procédé selon l'une quelconque des revendications 1 à 11,
**caractérisé en ce que**
lorsque les étapes de procédé a), b), c) et d) ont été effectuées, le couple réel mesuré et/ou la position réelle mesurée sont stockées et documentées.

13. Procédé selon l'une quelconque des revendications 1 à 12,
**caractérisé en ce que**
les unités motrices passent une séquence de mouvements pour la production intermittente de sachets tubulaires.

14. Procédé selon l'une quelconque des revendications 1 à 12,
**caractérisé en ce que**
les unités motrices passent une séquence de mouvements pour la production continue de sachets tubulaires.
